Europäisches Patentamt

European Patent Office

Office européen des brevets

(11) Numéro de publication: **0 254 641 B1**

(12) **FASCICULE DE BREVET EUROPEEN**

(45) Date de publication de fascicule du brevet: **22.04.92**

(51) Int. Cl.5: **C01B 9/08**, C01G 25/04, C01F 7/50, C03C 3/32

(21) Numéro de dépôt: **87401699.1**

(22) Date de dépôt: **21.07.87**

(54) **Procédé de préparation de fluorures métalliques utilisables pour la fabrication de verres fluores.**

(30) Priorité: **23.07.86 FR 8610697**

(43) Date de publication de la demande:
**27.01.88 Bulletin 88/04**

(45) Mention de la délivrance du brevet:
**22.04.92 Bulletin 92/17**

(84) Etats contractants désignés:
**CH DE GB IT LI NL**

(56) Documents cités:
EP-A- 0 052 354      EP-A- 0 133 106
EP-A- 0 192 514      EP-A- 0 196 666
US-A- 2 789 882      US-A- 3 314 749

(73) Titulaire: **COMMISSARIAT A L'ENERGIE ATO-MIOUE Etablissement de Caractère Scientifique Technique et Industriel**
**31/33, rue de la Fédération**
**F-75015 Paris(FR)**

(72) Inventeur: **Bridenne Alaux, Martine**
**2, rue Lalande**
**F-75014 Paris(FR)**
Inventeur: **Folcher, Gérard**

**décédé(FR)**
Inventeur: **Marquet-Ellis, Hubert**
**64. Boulevard de la République**
**F-78000 Versailles(FR)**
Inventeur: **Keller, Nelly**
**26, rue Delacroix l'Ermitage**
**F-91940 Les Ulis(FR)**

(74) Mandataire: **Mongrédien, André et al**
**c/o BREVATOME 25, rue de Ponthieu**
**F-75008 Paris(FR)**

## Description

L'invention a pour objet un procédé de préparation de fluorures métalliques, hydratés ou non, utilisables en particulier pour la fabrication de verres fluorés.

De façon plus précise, elle concerne un procédé pour préparer en continu des fluorures métalliques faciles à séparer du milieu réactionnel, et elle s'applique en particulier à la préparation de fluorures utilisables pour la fabrication de verres fluorés comme les fluorures de zirconium, d'aluminium, de terres rares tels que le lanthane, et de métaux alcalinoterreux tels que le baryum.

On connaît différents procédés de préparation de fluorures métalliques mais en général ceux-ci ne peuvent convenir pour la fabrication en continu des fluorures car le fluorure obtenu est difficile à séparer du milieu réactionnel.

Ainsi, le brevet US-A-2 639 218 décrit un procédé de fabrication de fluorure de zirconium anhydre qui consiste à faire réagir de l'oxyde de zirconium ou du chlorure de zirconyle avec une solution aqueuse d'acide fluorhydrique, à chauffer ensuite le milieu réactionnel pour le sécher et à calciner le produit sec obtenu.

Dans ce procédé, il est ainsi nécessaire de sécher complètement le milieu réactionnel pour récupérer le produit et ceci ne permet pas la fabrication en continu de tétrafluorure de zirconium.

Le brevet FR-A-2 059 672 illustre un procédé de préparation de tétrafluorure de zirconium, qui consiste à faire réagir une solution de nitrate de zirconyle dans l'acide nitrique avec de l'acide fluorhydrique en opérant à une température d'au moins 30°C, à séparer ensuite le tétrafluorure de zirconium monohydraté et à le sécher.

Ce mode de préparation peut être adapté à la production en continu de tétrafluorure de zirconium mais il nécessite l'utilisation d'un ensemble assez complexe pour la préparation de la solution de nitrate de zirconyle dans l'acide nitrique et pour la séparation des produits.

Le brevet US-A-2789882 illustre la préparation de tétrafluorure de zirconium par réaction de tétrachlorure de zirconium en suspension dans un liquide organique avec de l'acide fluorhydrique gazeux. On obtient ainsi un précipité de tétrafluorure de zirconium, mais celui-ci risque d'être pollué par le réactif solide ($ZrCl_4$) en suspension. De plus, on ne peut obtenir un précipité fin de $ZrF_4$.

Le document EP-A- 0 133 106 décrit un procédé de préparation de silane qui consiste à faire réagir dans un milieu liquide organique $SiF_4$ et un trihydrure d'aluminium complexé avec une amine tertiaire, ce qui produit simultanément une matière solide formée de $AlF_3$ non complexé mélangé à un complexe de $AlF_3$ et d'amine tertiaire.

Le document EP-A- 0 052 354 décrit un procédé de fabrication de métaux dans lequel on utilise des fluorures métalliques formés par mise en contact d'un solvant organique contenant un ion simple ou complexe du métal avec une solution aqueuse d'un agent fluorant choisi parmi HF, $NH_4HF_2$ et $NH_4F$.

La présente invention a précisément pour objet un procédé de préparation de fluorures métalliques qui permet la production en continu de fluorures facilement séparables du milieu réactionnel et pallie ainsi les inconvénients des procédés décrits ci-dessus.

Le procédé, selon l'invention, de préparation d'un fluorure d'un métal hydraté ou non consistant à faire réagir dans un milieu liquide organique, un composé dudit métal avec un agent fluorant puis à séparer du milieu le fluorure formé, se caractérise en ce que le composé dudit métal est choisi parmi les composés gazeux dudit métal, les composés dudit métal solubles dans le milieu liquide organique et les composés dudit métal en solution dans un solvant organique miscible à ce milieu, en ce que l'agent fluorant est choisi parmi les agents fluorants gazeux, les agents fluorants partiellement solubles dans le milieu organique et les agents fluorants partiellement solubles dans un solvant organique miscible à ce milieu et en ce que la réaction est effectuée de façon à former dans le milieu organique un précipité constitué essentiellement par le fluorure dudit métal, hydraté ou non, le milieu liquide organique étant tel qu'il ne réagisse ni avec le composé du métal, ni avec l'agent fluorant et qu'il ne dissolve pratiquement pas le fluorure formé.

L'utilisation dans le procédé de l'invention d'un milieu liquide organique et de réactifs présentant ces caractéristiques permet d'obtenir une réaction homogène. Le fluorure métallique produit sous forme de précipité peut être facilement séparé du milieu réactionnel sous être pollué par les réactifs puisque ceux-ci sont gazeux ou dissous dans le milieu organique. Par ailleurs, le produit obtenu présente généralement une grande surface spécifique, et une bonne homogénéité, ce qui est avantageux pour certaines applications. De plus, le procédé de l'invention peut être mis en oeuvre en continu, sans qu'il soit nécessaire d'utiliser une installation complexe à des températures proches de la température ambiante.

De préférence, dans le cas où la réaction de fluoration est exothermique, on utilise un milieu liquide organique ayant une température de congélation assez basse, qui peut donc être porté à une température basse, par exemple de -5 à +5°C pour absorber les calories de la réaction.

De préférence, on choisit également un milieu liquide organique ayant une volatilité faible à la température de la réaction de fluoration pour que ce milieu ne soit pas entraîné avec les produits gazeux de la réaction.

Le milieu organique est donc choisi en fonction des réactifs utilisés et du fluorure à former. Son choix dépend également des conditions de réaction.

A titre d'exemple, ce milieu liquide organique peut comprendre un hydrocarbure aliphatique ou aromatique tel que le toluène, ou un liquide perfluoré tel que les dérivés d'hydrocarbures renfermant du chlore et du fluor comme les produits commercialiés sous la marque Fréon®.

Les agents fluorants susceptibles d'être utilisés peuvent être des gaz fluorants anhydres ou hydratés tels que $F_2$, HF, ClF, $BF_3$, $NF_3$, $COF_2$ et $SF_4$.

On peut aussi utiliser des agents fluorants liquides, par exemple une solution aqueuse d'acide fluorhydrique, ou encore une solution de l'agent fluorant dans un solvant organique approprié, miscible au milieu organique utilisé pour la réaction.

Les composés métalliques susceptibles d'être utilisés dans l'invention peuvent être de différents types à condition bien entendu qu'ils soient capables de réagir avec un agent fluorant pour former le fluorure métallique recherché. On peut utiliser en particulier des borohydrures du métal, mais également des chlorures, des bromures, des oxychlorures etc. Ainsi, dans le cas où le métal est le zirconium, on peut utiliser comme composé de départ, des composés de formules :

$$ZrCl_4, \ Zr(RBH_3)_4 \ et \ R'_x(BH_4)_{4-x}Zr$$

dans lesquelles R représente un atome d'hydrogène, un atome d'halogène, un radical alkyle, un radical cycloalkyle, un radical cycloalcényle ou un radical aryle, R' représente un radical cycloalcényle et $x = 1$, 2 ou 3.

Dans le cas où le fluorure métallique à former est un fluorure d'aluminium, on peut utiliser comme composé de départ, $AlCl_3$ ou $Al(BH_4)_3$.

L'emploi des borohydrures de zirconium et d'aluminium répondant aux formules données ci-dessus est particulièrement intéressant lorsque le fluorure de zirconium ou d'aluminium produit doit être utilisé pour la fabrication de verres fluorés.

En effet, pour cette préparation, il est nécessaire de limiter la présence d'impuretés à des valeurs très faibles pour minimiser les pertes par absorption lorsque les verres fluorés sont destinés à la réalisation de fibres optiques pour la transmission de signaux. Or, les borohydrures de zirconium et d'aluminium mentionnés ci-dessus peuvent justement présenter un degré de pureté élevé et permettre ainsi la formation de tétrafluorure de zirconium ou de trifluorure d'aluminium ayant également un degré de pureté élevé.

Les borohydrures de zirconium de formule Zr-$(RBH_3)_4$ utilisés comme produits de départ pour la fluoration peuvent être synthétisés par des méthodes classiques telles que celle décrite par H.R. Hoekstra et J.J. Katz dans J.AM. Chem. Soc. 71, 2488, (1949) ou celle décrite par W.E. Reid, J.M. Bish et A. Brenner dans J. Electrochem. Soc. 21, (1957).

De préférence, on prépare le composé de zirconium par réaction de $Li(BH_3R)$ sur du tétrachlorure de zirconium selon le schéma réactionnel suivant :

$$ZrCl_4 \ + \ 4 \ Li(RBH_3) \rightarrow Zr(RBH_3)_4 \ + \ 4 \ LiCl.$$

Les composés de zirconium de formule $R'_x(BH_4)_{4-x}Zr$ peuvent être préparés par des méthodes classiques telles que celles décrites par B.D. James et B.E. Smith dans Syn. React. Inorg. Metalorg. chem., 4(5), pp. 461-465, (1974).

Pour mettre en oeuvre le procédé de l'invention, on peut envisager plusieurs modes de réalisation qui dépendent en particulier de la nature des composés de départ utilisés puisque ceux-ci peuvent être, soit tous deux gazeux, soit tous deux liquides, soit l'un gazeux et l'autre liquide.

Selon un premier mode de réalisation du procédé de l'invention, on utilise un composé gazeux du métal éventuellement dilué dans un gaz inerte. Dans ce cas, on peut réaliser la réaction en phase gazeuse en introduisant simultanément dans le milieu liquide organique, le composé gazeux du métal et un agent fluorant gazeux. De préférence, on dilue le composé gazeux du métal et l'agent fluorant gazeux dans un gaz inerte qui peut être choisi parmi l'azote et les gaz rares, par exemple l'argon. On peut aussi réaliser cette réaction en ayant le composé de métal en phase gazeuse et l'agent fluorant en phase liquide. Dans ce cas, on introduit simultanément dans le milieu liquide organique le composé gazeux du métal éventuellement dilué dans un gaz inerte et un agent fluorant liquide qui peut être par exemple une solution aqueuse d'acide fluorhydrique.

Ce premier mode de réalisation du procédé de l'invention peut être utilisé en particulier pour la fabrication du tétrafluorure de zirconium $ZrF_4$ hydraté ou non et du trifluorure d'aluminium $AlF_3$ en utilisant comme composé de départ le borohydrure de zirconium $Zr(BH_4)_4$ ou le borohydrure d'aluminium $Al(BH_4)_3$ dilués dans un gaz inerte. L'agent fluorant peut être de la vapeur d'acide fluorhydrique hydraté ou non, ou une solution aqueuse d'acide fluorhydrique.

Selon un second mode de réalisation du procédé de l'invention, on utilise un composé de métal soluble dans le milieu liquide organique. Dans ce cas, on peut soit réaliser la réaction en utilisant deux phases liquides, soit réaliser la réaction en utilisant une phase liquide et une phase gazeuse.

Dans le premier cas, on introduit simultanément dans le milieu liquide organique une solution du composé dans ce liquide organique et un agent fluorant liquide.

Dans le deuxième cas, on introduit simultanément dans le milieu liquide organique une solution du composé dans ce liquide organique et un agent fluorant gazeux.

Ce second mode de mise en oeuvre du procédé peut être utilisé en particulier pour la préparation d tétrafluorure de zirconium $ZrF_4$ et de trifluorure d'aluminium $AlF_3$ en utilisant comme composé de départ le borohydrure de zirconium $Zr(BH_4)_4$ ou le borohydrure d'aluminium $Al(BH_4)_3$ et un milieu liquide organique constitué par du toluène dans lequel ces borohydrures sont solubles.

Lorsque l'agent fluorant est liquide, on peut utiliser par exemple une solution aqueuse d'acide fluorhydrique. Lorsque l'agent fluorant est gazeux, on peut utiliser de la vapeur d'acide fluorhydrique dilué dans un gaz inerte.

Selon un troisième mode de réalisation du procédé de l'invention, on utilise un composé de métal non soluble dans le milieu liquide organique. Dans ce cas, il est nécessaire de dissoudre ce composé dans un solvant complexant pour former une solution du composé miscible au milieu liquide organique et on peut ensuite effectuer la réaction en utilisant, soit une phase liquide et une phase gazeuse, soit deux phases liquides.

Dans le premier cas, on introduit simultanément dans le milieu liquide organique la solution du composé dans le solvant complexant et un agent fluorant gazeux éventuellement dilué dans un gaz inerte. Dans le second cas, on introduit simultanément dans le milieu liquide organique la solution du composé dans le solvant complexant et un agent fluorant liquide.

Ce troisième mode de réalisation du procédé s'applique en particulier à la fabrication de tétrafluorures de zirconium $ZrF_4$ et de trifluorure d'aluminium $AlF_3$ en partant de composés de zirconium et d'aluminium tels que le chlorure de zirconium $ZrCl_4$ et le chlorure d'aluminium $AlCl_3$ dissous dans de l'acétonitrile, ce qui permet d'obtenir une solution de $ZrCl_4$ ou de $AlCl_3$ soluble dans un milieu organique tel que le toluène.

Les conditions de pression et de température utilisées dans les différents modes de mise en oeuvre du procédé de l'invention dépendent en particulier des composés de départ utilisés et de l'exothermicité de la réaction. Généralement, on opère à des températures allant de -40°C à la température ambiante, à la pression atmosphérique ou de préférence légèrement au-dessus.

Dans tous ces modes de réalisation de l'invention, le milieu liquide organique représente de préférence au moins 50% en poids du milieu réactionnel constitué par le liquide organique et les réactifs mis en jeu.

Le procédé de l'invention présente de nombreux avantages.

En effet, étant donné que la fluoration s'effectue au sein d'un milieu non aqueux, on peut modifier la cinétique de la réaction de fluoration en changeant la température du milieu et en ajustant le débit d'introduction du composé de métal et de l'agent fluorant ainsi que leur dilution éventuelle dans un solvant ou un gaz inerte.

Les sous-produits gazeux de la réaction tels que $B_2H_6$, $BF_3$, $H_2$, HF et $Cl_2$ peuvent être éliminés en continu du milieu réactionnel et l'on peut séparer également du milieu réactionnel le produit formé, par exemple $ZrF_4$ ou $AlF_3$ hydraté ou non en utilisant des techniques simples, par exemple la décantation ou la filtration.

Enfin, la fluoration pouvant s'effectuer à la température ambiante ou à une température inférieure, il n'est pas nécessaire d'utiliser un réacteur en matériau résistant aux hautes températures, et l'on peut utiliser en particulier des réacteurs en différents polymères, par exemple en polyéthylène ou en polymère fluoré, inertes vis-à-vis des réactifs utilisés et n'apportant pas d'impureté gênante dans l'application des fibres optiques en verres fluorés.

Le procédé de l'invention peut être mis en oeuvre pour la préparation de nombreux fluorures métalliques, hydratés ou non, en particulier pour la production de fluorures de métaux tels que le tétrafluorure de zirconium, du fluorure d'aluminium, des fluorures de métaux alcalinoterreux, par exemple le fluorure de baryum, et des fluorures de terres rares comme le fluorure de lanthane. L'obtention d'un fluorure hydraté dépend en particulier des réactifs de départ, notamment de la nature de l'agent fluorant utilisé. En effet, lorsqu'on utilise comme agent fluorant de la vapeur d'acide fluorhydrique hydraté ou une solution aqueuse d'acide fluorhydrique, on obtient généralement un fluorure hydraté. Celui-ci peut être purifié et transformé en fluorure anhydre par des traitements appropriés, par exemple par chauffage vers 300°C sous atmosphère d'HF anhydre.

Le procédé de l'invention offre aussi la possibilité d'obtenir des fluorures de grande pureté notamment en choisissant soit des composés de départ de grande pureté, soit un milieu liquide organique approprié.

En effet, si le composé métallique de départ comprend certaines impuretés qui donneront lieu à la formation d'impuretés fluorées lors de la réaction de fluoration, on peut éliminer ces impuretés du fluorure formé en choisissant un milieu liquide organique dans lequel ces impuretés sont de solubilité différente du fluorure recherché.

D'autres caractéristiques et avantages de l'invention apparaîtront mieux à la lecture des exemples suivants donnés bien entendu à titre illustratif et non limitatif, en référence au dessin annexé sur lequel :

- la figure 1 représente de façon schématique une installation de préparation de fluorure métallique selon le premier mode de mise en oeuvre du procédé, et
- la figure 2 représente de façon schématique une installation adaptée à la mise en oeuvre du second mode et du troisième mode de réalisation du procédé de l'invention.

EXEMPLE 1 : Préparation de $ZrF_4$, $3H_2O$.

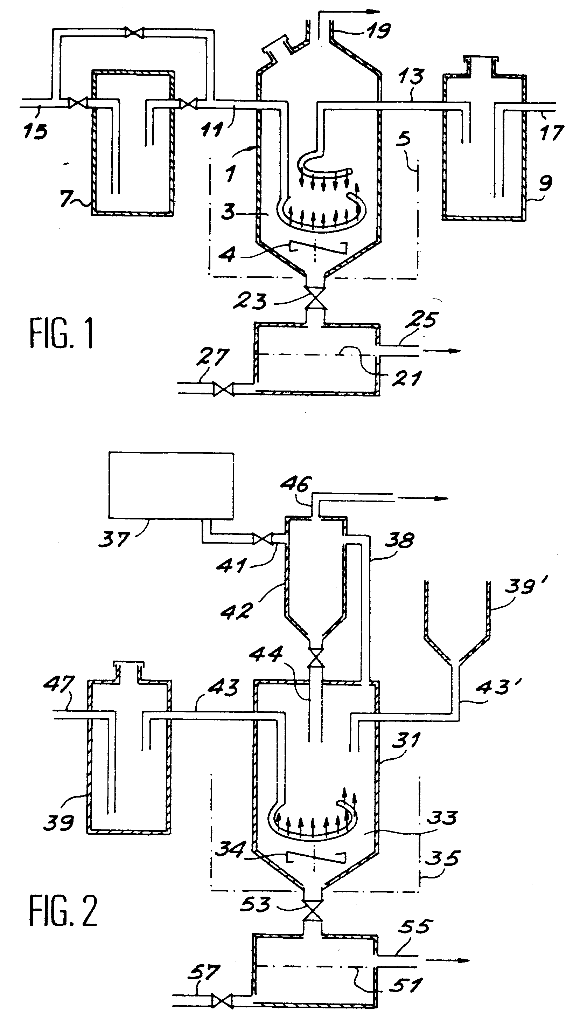

Dans cet exemple, on utilise le premier mode de mise en oeuvre du procédé de l'invention et l'installation représentée sur la figure 1 en introduisant le composé de métal et l'agent fluorant tous deux en phase gazeuse avec de l'argon.

Le milieu liquide organique est constitué par du toluène, le composé de zirconium est du $Zr(BH_4)_4$ et l'agent fluorant est de la vapeur d'acide fluorhydrique hydraté.

Sur la figure 1, on voit que l'installation comprend un réacteur 1 contenant le milieu liquide organique 3 constitué par du toluène, qui peut être agité par l'agitateur 4 et maintenu à une température appropriée grâce à un bain thermostaté 5. Les réactifs utilisés qui sont, d'une part, le $Zr(BH_4)_4$ et le HF aqueux sont stockés respectivement dans les récipients 7 et 9 et ils peuvent être introduits dans le réacteur 1 par les canalisations 11 et 13 en étant véhiculés par un courant d'argon sec introduit dans les récipients 7 et 9 par les conduites 15 et 17. Les conduites 11 et 13 débouchent dans le réacteur 1 et au-dessous du niveau du toluène et elles sont agncés l'une par rapport à l'autre de façon telle que les deux gaz qui s'échappent de ces canalisations puissent réagir entre eux au sein du toluène. Le réacteur 1 est muni à sa partie supérieure d'une conduite 19 d'échappement des produits gazeux de la réaction et de moyens appropriés, non représentés sur le dessin, permettant de régler la pression des deux courants d'argon introduits dans le réacteur 1.

Dans cet exemple, on dispose 4g de $Zr(BH_4)_4$ dans le récipient 7 et une solution aqueuse à 40 % de HF dans le récipient 9. Le réacteur 1 contient 50 ml de toluène qui sont maintenus à 0°C environ par le bain 5. On introduit en continu un courant d'argon dans les récipients 7 et 9 à une pression supérieure à 18,9 kPa pour extraire le $Zr(BH_4)_4$ et la vapeur d'acide fluorhydrique et les introduire dans le réacteur 1 et l'on poursuit cette introduction pendant une heure.

En fin d'opération, on fait écouler le milieu liquide 3 à l'intérieur duquel a été précipité le produit $ZrF_4$, $3H_2O$ dans le filtre 21 en ouvrant la vanne 23 et on recueille ainsi le produit solide $ZrF_4$, $3H_2O$ qui peut être évacué de l'installation par la conduite 25 tandis que le toluène peut être récupéré par la conduite 27 et recyclé dans le réacteur 1.

On récupère ainsi 5g de $ZrF_4$, $3H_2O$ que l'on peut déshydrater en $ZrF_4$, $H_2O$ par balayage d'argon à 200°C.

Cette installation peut être utilisée dans les mêmes conditions pour préparer du trifluorure d'aluminium $AlF_3$ en partant de $Al(BH_4)_3$ et d'une solution d'acide fluorhydrique et en utilisant comme milieu liquide organique du toluène.

Dans cette installation, les produits issus de la réaction qui sont dans ce cas $B_2H_6$, $BF_3$, $H_2$ et HF sont évacués du réacteur 1 avec de l'argon par la conduite 19.

Avec cette installation, on peut aussi réaliser la réaction en introduisant directement l'acide fluorhydrique sous forme liquide dans le toluène 3.

EXEMPLE 2 : Préparation de $ZrF_4$, $3H_2O$.

Dans cet exemple, on utilise le deuxième mode de réalisation du procédé de l'invention et l'installation représentée sur la figure 2.

Dans ce cas, les réactifs utilisés sont une solution de $Zr(BH_4)_4$ dans du toluène et l'agent fluorant est de la vapeur d'acide fluorhydrique hydraté dilué par de l'argon.

L'installation représentée sur la figure 2 comprend comme celle de la figure 1, un réacteur 31 contenant du toluène 33, maintenu à la température voulue par un bain thermostaté 35 et agité par l'agitateur 34. Ce réacteur est relié à sa partie inférieure par une conduite munie d'une vanne 53 à un filtre 51 analogue à celui de la figure 1 qui comprend également une conduite d'évacuation des solides 55 et une conduit d'évacuation du toluène 57. La solution de $Zr(BH_4)_4$ dans du toluène est stockée dans un récipient 37 et elle peut être introduite dans le réacteur 31 par une conduite 41, un récipient intermédiaire 42 muni à sa partie inférieure d'une conduite 44 qui débouche dans le réacteur 31 au-dessus du niveau du toluène. Les vapeurs d'acide fluorhydrique hydraté peuvent être introduites dans le réacteur 31 à partir du récipient 39 contenant une solution aqueuse de HF à 40% au moyen d'un courant d'argon introduit par la conduite 47 qui se charge dans le récipient 39 de vapeur d'acide fluorhydrique hydraté et qui est introduit ensuite dans le réacteur 31 par la conduite 43. Celle-ci débouche dans le réacteur en-dessous du niveau du toluène de façon à faire échapper le gaz en regard de la conduite 44.

Les produits gazeux issus de la réaction peuvent être évacués par la conduite 38 qui débouche dans le récipient intermédiaire 42 et être évacués ensuite par la conduite 46.

Dans cet exemple, le réacteur 31 contient du toluène maintenu à environ 0°C et on introduit simultanément dans celui-ci le courant d'argon contenant la vapeur de HF hydraté sous une pression supérieure à 100 torrs et la solution de Zr-(BH$_4$)$_4$ en réglant le débit d'écoulement de cette solution pour opérer avec un excès d'agent fluorant.

On obtient ainsi du ZrF$_4$, 3H$_2$O qui précipite dans le toluène 33 avec un rendement de 80%.

En fin d'opération, on filtre le milieu réactionnel 33 contenant le ZrF$_4$, 3H$_2$O, on récupère le toluène par la conduite 57 et on le recycle dans le réacteur 1. On peut ensuite laver le ZrF$_4$, 3H$_2$O au moyen d'eau pour éliminer BO$_3$H$_3$.

Selon une variante de réalisation, on peut utiliser comme agent fluorant la solution aqueuse d'acide fluorhydrique à 40% en l'introduisant directement dans le réacteur 1 par exemple à partir d'un récipient 39′ et d'une conduite 43′ débouchant dans le réacteur au-dessus du niveau de toluène au voisinage de la conduite 44.

De même, on peut utiilser cette installation pour préparer du AlF$_3$ en utilisant dans le récipient 37 une solution de Al(BH$_4$)$_3$ dans du toluène.

EXEMPLE 3 : Préparation de ZrF$_4$ hydraté.

Dans cet exemple, on utilise le troisième mode de mise en oeuvre du procédé de l'invention et l'installation représentée sur la figure 2.

Le composé de zirconium est du ZrCl$_4$ que l'on dissout préalablement dans de l'acétonitrile et que l'on stocke dans le récipient 37.

L'agent fluorant est comme dans l'exemple 2 constitué par de la vapeur d'acide fluorhydrique hydraté entraînée par de l'argon.

On dispose dans le récipient (37) 6g de ZrCl$_4$ dissous dans 100 cm$^3$ de CH$_3$CN et l'on introduit cette solution dans le réacteur 31 qui contient le toluène en même temps que le courant d'argon chargé de vapeur de HF hydraté provenant du récipient 39. On maintient le réacteur à une température voisine de 0°C et l'on précipite ainsi dans le toluène 33 du ZrF$_4$ hydraté qui peut être sous la forme ZrF$_4$, 1H$_2$O ou ZrF$_4$, 3H$_2$O. On sépare ce précipité de la solution comme dans l'exemple 2, puis on le lave pour éliminer BO$_3$H$_3$ et on le sèche sous vide. Le rendement est de 83%.

EXEMPLE 4 : Préparation de AlF$_3$ hydraté.

Dans cet exemple, on utilise le même mode opératoire que dans l'exemple 3 mais la solution présente dans le récipient 37 est formée de 2,3g de AlCl$_3$ dissous dans 30 cm$^3$ de CH$_3$CN. Le milieu liquide 33 est du toluène qui est maintenu à 0°C comme précédemment et l'on utilise le même agent fluorant que dans l'exemple 2 et les mêmes conditions de pression.

On précipite ainsi dans le toluène du AlF$_3$ hydraté (sous la forme alpha et bêta, 3H$_2$O) que l'on sépare comme dans l'exemple 3 et que l'on lave pour éliminer BO$_3$H$_3$. Le rendement est supérieur à 70%.

**Revendications**

1. Procédé de préparation d'un fluorure d'un métal, hydraté ou non, consistant à faire réagir, dans un milieu liquide organique, un composé dudit métal avec un agent fluorant puis à séparer du milieu le fluorure formé, caractérisé en ce que le composé dudit métal est choisi parmi les composés gazeux dudit métal, les composés dudit métal solubles dans le milieu liquide organique et les composés dudit métal en solution dans un solvant organique miscible à ce milieu, en ce que l'agent fluorant est choisi parmi les agents fluorants gazeux, les agents fluorants partiellement solubles dans le milieu organique et les agents fluorants partiellement solubles dans un solvant organique miscible à ce milieu, et en ce que la réaction est effectuée de façon à former dans le milieu organique un précipité constitué essentiellement par le fluorure dudit métal, hydraté ou non, le milieu liquide organique étant tel qu'il ne réagisse ni avec le composé du métal, ni avec l'agent fluorant et qu'il ne dissolve pratiquement pas le fluorure formé.

2. Procédé selon la revendication 1, caractérisé en ce que le milieu liquide organique comprend un hydrocarbure aliphatique ou aromatique ou un dérivé d'hydrocarbure renfermant du fluor et du chlore.

3. Procédé selon l'une quelconque des revendications 1 et 2, caractérisé en ce que le métal est le zirconium.

4. Procédé selon la revendication 3, caractérisé en ce que le composé de zirconium est choisi parmi les composés de formules :

ZrCl$_4$, Zr(RBH$_3$)$_4$ et R′$_x$(BH$_4$)$_{4-x}$Zr

dans lesquelles R représente un atome d'hydrogène, un atome d'halogène, un radical alkyle, un radical cycloalkyle, un radical cycloalcényle ou un radical aryle, R′ représente un radical cycloalcényle et x = 1, 2 ou 3.

**5.** Procédé selon l'une quelconque des revendications 1 et 2, caractérisé en ce que le métal est l'aluminium.

**6.** Procédé selon la revendication 5, caractérisé en ce que le composé d'aluminium est AlCl₃ ou Al(BH₄)₃.

**7.** Procédé selon l'une quelconque des revendications 1 à 3 et 5, caractérisé en ce que l'on utilise un composé gazeux dudit métal et en ce que l'on introduit simultanément dans le milieu liquide organique le composé gazeux dudit métal et un agent fluorant gazeux ou liquide.

**8.** Procédé selon la revendication 7, caractérisé en ce que le composé gazeux dudit métal est dilué dans un gaz inerte.

**9.** Procédé selon la revendication 8, caractérisé en ce que le composé de métal est choisi parmi le borohydrure de zirconium Zr(BH₄)₄ et le borohydrure d'aluminium Al(BH₄)₃.

**10.** Procédé selon l'une quelconque des revendications 1 à 3 et 5, caractérisé en ce que l'on utilise un composé dudit métal soluble dans ledit milieu et en ce que l'on introduit simultanément dans le milieu liquide organique une solution dudit composé dans ce liquide organique et un agent fluorant gazeux ou liquide.

**11.** Procédé selon la revendication 10, caractérisé en ce que le composé de métal est du borohydrure de zirconium Zr(BH₄)₄ ou du borohydrure d'aluminium Al(BH₄)₃ et en ce que le milieu liquide organique est du toluène.

**12.** Procédé selon l'une quelconque des revendications 1 à 3 et 5, caractérisé en ce que l'on utilise un composé dudit métal non soluble dans le milieu liquide organique, en ce que l'on dissout ce composé dans un solvant complexant pour former une solution du composé miscible avec ledit milieu liquide organique et en ce que l'on introduit simultanément dans le milieu liquide organique la solution du composé et un agent fluorant gazeux ou liquide.

**13.** Procédé selon la revendiation 12, caractérisé en ce que le composé de métal est ZrCl₄ ou AlCl₃ et en ce que l'on dissout ce composé dans de l'acétonitrile.

**14.** Procédé selon l'une quelconque des revendications 7 à 13, caractérisé en ce que le milieu liquide organique est du toluène.

**15.** Procédé selon l'une quelconque des revendications 1 à 14, caractérisé en ce que l'agent fluorant est un composé gazeux choisi parmi F₂, HF, ClF, BF₃, NF₃, COF₂ et SF₄.

**16.** Procédé selon la revendication 15, caractérisé en ce que l'agent fluorant est dilué dans un gaz inerte.

**17.** Procédé selon l'une quelconque des revendications 1 à 14, caractérisé en ce que l'agent fluorant est une solution aqueuse d'acide fluorhydrique.

**Claims**

**1.** Process for the preparation of a fluoride of a hydrated or unhydrated metal consisting of reacting in a liquid organic medium, a compound of said metal with a fluorinating agent, followed by the separation of the fluoride formed from the medium, characterized in that the compound of said metal is chosen from among the gaseous compounds of said metal, the compounds of said metal soluble in the organic liquid medium and the compounds of said metal dissolved in an organic solvent miscible with said medium, in that the fluorinating agent is chosen from among gaseous fluorinating agents, fluorinating agents partly soluble in the organic medium and fluorinating agents partly soluble in an organic solvent miscible with said medium and in that the reaction is performed in such a way as to form in the organic medium a precipitate essentially constituted by the fluoride of said hydrated or unhydrated metal, the organic liquid medium being such that it does not react with the compound of the metal or with the fluorinating agent and that it does not dissolve the fluoride formed.

**2.** Process according to claim 1, characterized in that the organic liquid medium comprises an aliphatic or aromatic hydrocarbon or a hydrocarbon derivative containing fluorine and chlorine.

**3.** Process according to either of the claims 1 and 2, characterized in that the metal is zirconium.

**4.** Process according to claim 3, characterized in that the zirconium compound is chosen from among the compounds of formulas:

ZrCl₄, Zr(RBH₃)₄ and R'ₓ(BH₄)₄₋ₓZr

in which R represents a hydrogen atom, a halogen atom, an alkyl radical, a cycloalkyl radical, a cycloalkenyl radical or an aryl radical, R' represents a cycloalkenyl radical and x = 1, 2 or 3.

5. Process according to either of the claims 1 and 3, characterized in that the metal is aluminium.

6. Process according to claim 5, characterized in that the aluminium compound is AlCl₃ or Al-(BH₄)₃.

7. Process according to any one of the claims 1 to 3 and 5, characterized in that use is made of a gaseous compound of said metal and that simultaneous introduction takes place into the organic liquid medium of the gaseous compound of said metal and a gaseous or liquid fluorinating agent.

8. Process according to claim 7, characterized in that the gaseous compound of said metal is diluted in an inert gas.

9. Process according to claim 8, characterized in that the metal compound is chosen from among zirconium borohydride Zr(BH₄)₄ and aluminium borohydride Al(BH₄)₃.

10. Process according to any one of the claims 1 to 3 and 5, characterized in that use is made of a compound of said metal soluble in said medium and in that there is simultaneous introduction into the organic liquid medium of a solution of said compound in said organic liquid and a gaseous or liquid fluorinating agent.

11. Process according to claim 10, characterized in that the metal compound is zirconium borohydride Zr(BH₄)₄ or aluminium borohydride Al(BH₄)₃ and wherein the organic liquid medium is toluene.

12. Process according to any one of the claims 1 to 3 and 5, characterized in that use is made of a compound of said metal which is not soluble in the organic liquid medium, that said compound is dissolved in a complexing solvent to form a solution of the compound miscible with said organic liquid medium and that there is simultaneous introduction into the organic liquid medium of the solution of the compound and a gaseous or liquid fluorinating agent.

13. Process according to claim 12, characterized in that the metal compound is ZrCl₄ or AlCl₃ and that said compound is dissolved in acetonitrile.

14. Process according to any one of the claims 7 to 13, characterized in that the organic liquid medium is toluene.

15. Process according to any one of the claims 1 to 14, characterized in that the fluorinating agent is a gaseous compound chosen from among F₂, HF, ClF, BF₃, NF₃, COF₂ and SF₄.

16. Process according to claim 15, characterized in that the fluorinating agent is diluted in an inert gas.

17. Process according to any one of the claims 1 to 14, characterized in that the fluorinating agent is an aqueous hydrofluoric acid solution.

**Patentansprüche**

1. Verfahren zur Herstellung eines hydratisierten oder nichthydratisierten Metallfluorids, bestehend aus dem Reagierenlassen einer Verbindung des besagten Metalls mit einem Fluorierungsmittel in einem flüssigen organischen Medium, dann dem Abtrennen des gebildeten Fluorids aus dem Medium, dadurch gekennzeichnet, daß die Verbindung des besagten Metalls unter den gasförmigen Verbindungen des besagten Metalls, den in dem flüssigen organischen Medium löslichen Verbindungen des besagten Metalls und den Verbindungen des besagten Metalls in Lösung in einem mit diesem Medium mischbaren organischen Lösungsmittel ausgewählt ist, daß das Fluorierungsmittel unter den gasförmigen Fluorierungsmitteln, den in dem organischen Medium teilweise löslichen Fluorierungsmitteln und den in einem mit diesem Medium mischbaren organischen Lösungsmittel teilweise löslichen Fluorierungsmitteln ausgewählt ist und daß die Reaktion so ausgeführt wird, daß sich in dem organischen Medium ein im wesentlichen aus dem hydratisierten oder nichthydratisierten Fluorid des besagten Metalls bestehender Niederschlag bildet, wobei das flüssige organische Medium solcherart ist, daß es weder mit der Metallverbindung noch mit dem Fluorierungsmittel reagiert und das es das gebildete Fluorid praktisch nicht löst.

2. Verfahren gemäß Anspruch 1, dadurch gekennzeichnet, daß das flüssige organische Medium einen aliphatischen oder aromatischen Kohlenwasserstoff oder ein Fluor oder Chlor enthaltendes Kohlenwasserstoff-Derivat umfaßt.

3. Verfahren gemäß einem der Ansprüche 1 oder 2, dadurch gekennzeichnet, daß das Metall Zirkonium ist.

4. Verfahren gemäß Anspruch 3, dadurch gekennzeichnet, daß die Zirkoniumverbindung unter den Verbindungen der Formel:

$ZrCl_4$, $Zr(RBH_3)_4$ und $R'_x(BH_4)_{4-x}Zr$

in welcher R ein Wasserstoff-Atom, ein Halogen-Atom, einen Alkyl-Rest, einen Cycloalkyl-Rest, einen Cycloalkenyl-Rest oder einen Aryl-Rest bedeutet, R' einen Cycloalkenyl-Rest bedeutet und x = 1, 2 oder 3, ausgewählt ist.

5. Verfahren gemäß einem der Ansprüche 1 und 2, dadurch gekennzeichnet, daß das Metall Aluminium ist.

6. Verfahren gemäß Anspruch 5, dadurch gekennzeichnet, daß die Aluminiumverbindung $AlCl_3$ oder $Al(BH_4)_3$ ist.

7. Verfahren gemäß einem der Ansprüche 1 bis 3 oder 5, dadurch gekennzeichnet, daß man eine gasförmige Verbindung des besagten Metalls verwendet und daß man die gasförmige Verbindung des besagten Metalls und ein gasförmiges oder flüssiges Fluorierungsmittel gleichzeitig in das flüssige organische Medium einführt.

8. Verfahren gemäß Anspruch 7, dadurch gekennzeichnet, daß die gasförmige Verbindung des besagten Metalls in einem Inertgas verdünnt ist.

9. Verfahren gemäß Anspruch 8, dadurch gekennzeichnet, daß die Metallverbindung unter Zirkoniumborhydrid $Zr(BH_4)_4$ und Aluminiumborhydrid $Al(BH_4)_3$ ausgewählt ist.

10. Verfahren gemäß einem der Ansprüche 1 bis 3 oder 5, dadurch gekennzeichnet, daß man eine in dem besagten Medium lösliche Verbindung des besagten Metalls verwendet und daß man in das flüssige organische Medium gleichzeitig eine Lösung der besagten Verbindung in dieser organischen Flüssigkeit und ein gasförmiges oder flüssiges Fluorierungsmittel einführt.

11. Verfahren gemäß Anspruch 10, dadurch gekennzeichnet, daß die Metallverbindung Zirkoniumborhydrid $Zr(BH_4)_4$ oder Aluminiumborhydrid $Al(BH_4)_3$ ist und daß das flüssige organische Medium Toluol ist.

12. Verfahren gemäß einem der Ansprüche 1 bis 3 oder 5, dadurch gekennzeichnet, daß man eine in dem flüssigen organischen Medium nichtlösliche Verbindung des besagten Metalls verwendet und daß man diese Verbindung in einem Komplexierungslösungsmittel löst, um eine mit dem besagten flüssigen organischen Medium mischbare Lösung der Verbindung zu bilden, und daß man die Lösung der Verbindung und ein gasförmiges oder flüssiges Fluorierungsmittel gleichzeitig in das flüssige organische Medium einführt.

13. Verfahren gemäß Anspruch 12, dadurch gekennzeichnet, daß die Metallverbindung $ZrCl_4$ oder $AlCl_3$ ist und daß man diese Verbindung in Acetonitril löst.

14. Verfahren gemäß einem der Ansprüche 7 bis 13, dadurch gekennzeichnet, daß das flüssige organische Medium Toluol ist.

15. Verfahren gemäß einem der Ansprüche 1 bis 14, dadurch gekennzeichnet, daß das Fluorierungsmittel eine aus $F_2$, HF, ClF, $BF_3$, $NF_3$, $COF_2$ und $SF_4$ ausgewählte gasförmige Verbindung ist.

16. Verfahren gemäß Anspruch 15, dadurch gekennzeichnet, daß das Fluorierungsmittel in einem Inertgas verdünnt ist.

17. Verfahren gemäß einem der Ansprüche 1 bis 14, dadurch gekennzeichnet, daß das Fluorierungsmittel eine wäßrige Lösung von Fluorwasserstoffsäure ist.

FIG. 1

FIG. 2